(19) Europäisches Patentamt / European Patent Office / Office européen des brevets

(11) **EP 3 944 366 A1**

(12) **EUROPEAN PATENT APPLICATION**

(43) Date of publication:
**26.01.2022 Bulletin 2022/04**

(21) Application number: **21184615.9**

(22) Date of filing: **08.07.2021**

(51) International Patent Classification (IPC):
**H01M 4/131** (2010.01)     **H01M 4/36** (2006.01)
**H01M 4/505** (2010.01)     **H01M 4/525** (2010.01)

(52) Cooperative Patent Classification (CPC):
**H01M 4/131; H01M 4/364; H01M 4/366;
H01M 4/505; H01M 4/525**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.07.2020   KR 20200089847**

(71) Applicant: **SK Innovation Co., Ltd.
Seoul 03188 (KR)**

(72) Inventors:
• **Kang, Min Suk
  34124 Daejeon (KR)**
• **Kang, Min Gu
  Daejeon 34124 (KR)**
• **Kim, Soo Ho
  34124 Daejeon (KR)**

(74) Representative: **Stolmár & Partner
Patentanwälte PartG mbB
Blumenstraße 17
80331 München (DE)**

(54) **CATHODE FOR LITHIUM SECONDARY BATTERY AND LITHIUM SECONDARY BATTERY INCLUDING THE SAME**

(57)     A cathode for a lithium secondary battery includes a cathode current collector, a first cathode active material layer including a first cathode active material particle, and a second cathode active material layer including a second cathode active material particle. The first cathode active material layer and the second cathode active material layer are sequentially stacked from the cathode current collector. The first cathode active material particle and the second cathode active material particle have different compositions or particle structures from each other. The first cathode active material particle and the second cathode active material particle include lithium metal oxides containing nickel. The second cathode active material particle has a single particle shape and has a particle size distribution satisfying a specific range relation.

EP 3 944 366 A1

**Description**

CROSS-REFERENCE TO RELATED APPLICATION AND CLAIM OF PRIORITY

This application claims priority to Korean Patent Application No. 10-2020-0089847 filed on July 20, 2020 in the Korean Intellectual Property Office (KIPO), the entire disclosure of which is incorporated by reference herein.

BACKGROUND

1. Field

The present invention relates to a cathode for a lithium secondary battery and a lithium secondary battery including the same. More particularly, the present invention relates to a cathode for a lithium secondary battery including a lithium metal oxide-based cathode active material, and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as a hybrid automobile.
The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.
For example, the lithium secondary battery may include an electrode assembly including a cathode, an anode and a separation layer (separator), and an electrolyte immersing the electrode assembly. The lithium secondary battery may further include an outer case having, e.g., a pouch shape.
A lithium metal oxide may be used as a cathode active material of the lithium secondary battery preferably having high capacity, power and life-span. However, when a pressing process is performed to obtain a high energy density as an application of the lithium secondary battery becomes expanded, cracks may be generated in the cathode active material. In this case, a side reaction with the electrolyte may be caused to generate a gas in the battery and to degrade a long term-life span and high temperature storage properties. Further, a thermal stability for preventing a short-circuit and an ignition when a penetration by an external object occurs may be required in the lithium secondary battery or the cathode active material.
However, the cathode active material satisfying the above-mentioned properties may not be easily obtained. For example, Korean Publication of Patent Application No. 10-2017-0093085 discloses a cathode active material including a transition metal compound and an ion adsorbing binder, which may not provide sufficient life-span and stability.

SUMMARY

According to an aspect of the present invention, there is provided a cathode for a lithium secondary battery having improved operational stability and reliability.
According to exemplary embodiments, there is provided a lithium secondary battery including the cathode.
According to exemplary embodiments, a cathode for a lithium secondary battery includes a cathode current collector, and a first cathode active material layer including a first cathode active material particle and a second cathode active material layer including a second cathode active material particle. The first cathode active material layer and the second cathode active material layer are sequentially stacked from the cathode current collector. The first cathode active material particle and the second cathode active material particle have different compositions or particle structures from each other, and the first cathode active material particle and the second cathode active material particle include lithium metal oxides containing nickel. The second cathode active material particle has a single particle shape and has a particle size distribution satisfying Equation 1.

$$[\text{Equation 1}]$$

$$1 \leq D_{90} / D_{10} \leq 4$$

In Equation 1, $D_{90}$ and $D_{10}$ represent particle size values corresponding to 90% and 10%, respectively, with respect to a maximum particle size in a volume-based cumulative particle size distribution.

In some embodiments, the first cathode active material particle may have a secondary particle structure in which primary particles are assembled.

In some embodiments, a molar ratio of nickel among metals except for lithium in the first cathode active material particle may be 60% or more.

In some embodiments, the first cathode active material particle may include a lithium metal oxide represented by Chemical Formula 1.

$$[\text{Chemical Formula 1}] \qquad Li_xNi_aM1_bM2_cO_y$$

In Chemical Formula 1, M1 and M2 may each include at least one element selected from the group consisting of Co, Mn, Na, Mg, Ca, Ti, V, Cr, Cu, Zn, Ge, Sr, Ag, Ba, Zr, Nb, Mo, Al, Ga and B, and $0<x \leq 51.2$, $2 \leq y \leq 2.02$, $0.6 \leq a \leq 0.95$, and $0.05 \leq b+c \leq 0.4$.

In some embodiments, the first cathode active material particle may include a concentration gradient region between a central portion and a surface, and a concentration gradient of at least one metal may be formed in the concentration gradient region.

In some embodiments, the second cathode active material particle may further include cobalt, and a molar ratio of cobalt among metals except for lithium in the second cathode active material particle may be 15% or less.

In some embodiments, a molar ratio of nickel among metals except for lithium in the second cathode active material particle may be 50% or more.

In some embodiments, elements of a lithium metal oxide included in the second cathode active material particle may have constant concentrations from a central portion to a surface.

In some embodiments, an average particle diameter of the second cathode active material particle may be in a range from 3 $\mu$m to 6 $\mu$m.

In some embodiments, the second cathode active material particle may include a lithium metal oxide represented by Chemical Formula 2.

$$[\text{Chemical Formula 2}] \qquad Li_xNi_aCo_bMn_cM4_dM5_eO_y$$

In Chemical Formula 2, M4 may include at least one element selected from the group consisting of Ti, Zr, Al, Mg, Si, B and Cr, M5 may include at least one element selected from the group consisting of Sr, Y, W and Mo, and $0<x<1.5$, $2 \leq y \leq 2.02$, $0.50 \leq a \leq 0.75$, $0.05 \leq b \leq 0.15$, $0.20 \leq c \leq 0.30$, $0 \leq d \leq 0.03$, $0 \leq e \leq 0.03$ and $0.98 \leq a+b+c \leq 1.03$.

In some embodiments, a crystallite size of the second cathode active material particle may be in a range from 200 nm to 600 nm.

In some embodiments, a weight ratio of the second cathode active material particle and the first cathode active material particle included in the cathode may be 1:9 to 6:4.

In some embodiments, a nickel content in the second cathode active material particle may be smaller than that in the first cathode active material particle.

In some embodiments, an average diameter of the second cathode active material particle may be smaller than that of the first cathode active material particle.

According to exemplary embodiments, a lithium secondary battery including the cathode for a lithium secondary battery as described above, and an anode facing the cathode is provided.

The lithium secondary battery according to exemplary embodiments as described above may include a cathode active material layer having a multi-layered structure. The cathode active material layer may include a first cathode active material layer having a cathode active material particle of a multi-particle structure, and a second cathode active material layer having a cathode active material particle of a single particle shape.

In this case, cracks of a cathode active material caused during a pressing process may be prevented so that mechanical and electrical stability of the cathode may be enhanced while achieving a high energy density of the lithium secondary battery.

In exemplary embodiments, a 90% particle size with respect to a maximum particle size in a cumulative particle size distribution relative to a 10% particle size with respect to a maximum particle size in a cumulative particle size distribution may be 4 or less. In this case, a high-capacity battery may be obtained while improving a conductivity and life-span of the battery.

BRIEF DESCRIPTION OF THE DRAWINGS

FIG. 1 is a schematic cross-sectional view illustrating a cathode for a lithium secondary battery in accordance with exemplary embodiments.

FIGS. 2 and 3 are a schematic top planar view and a schematic cross-sectional view illustrating a lithium secondary battery in accordance with exemplary embodiments.

FIG. 4 is a graph showing gas generations from lithium secondary batteries of Examples and Comparative Examples in a high temperature storage.

DETAILED DESCRIPTION OF THE EMBODIMENTS

According to exemplary embodiments of the present invention, a cathode for a lithium secondary battery having a multi-layered structure that includes a first active material layer and a second active material layer which include different cathode active material particles is provided. A lithium secondary battery including the cathode is also provided.

Hereinafter, the present invention will be described in detail with reference to the accompanying drawings. However, those skilled in the art will appreciate that such embodiments described with reference to the accompanying drawings are provided to further understand the spirit of the present invention and do not limit subject matters to be protected as disclosed in the detailed description and appended claims.

The terms "first" and "second" are used herein not to limit the number or the order of elements or objects, but to relatively designate different elements.

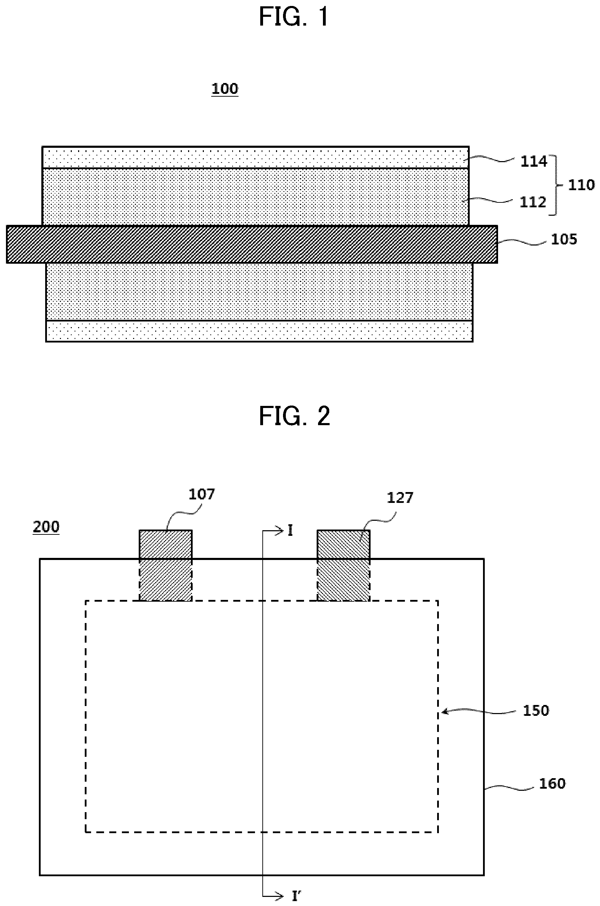

FIG. 1 is a schematic cross-sectional view illustrating a cathode for a lithium secondary battery in accordance with exemplary embodiments.

Referring to FIG. 1, a cathode 100 may include a cathode active material layer 110 formed on at least one surface of a cathode current collector 105. The cathode material layer 110 may be formed on both surfaces (e.g., upper and lower surfaces) of the cathode current collector 105 .

The cathode current collector 105 may include, e.g., stainless steel, nickel, aluminum, titanium, copper or an alloy thereof, and may preferably aluminum or an aluminum alloy.

In exemplary embodiments, the cathode active material layer 110 may include a first cathode active material layer 112 and a second cathode active material layer 114. Accordingly, the cathode active material layer 110 may have a multi-layered structure (e.g., a double-layered structure) in which a plurality of cathode active material layers may be stacked.

The first cathode active material layer 112 may be formed on a surface of the cathode current collector 105. For example, the first cathode active material layer 112 may be formed on each of the upper and lower surfaces of the cathode current collector 105. As illustrated in FIG. 1, the first cathode active material layer 112 may directly contact the surface of the cathode current collector 105.

The first cathode active material layer 112 may include first cathode active material particles. The first cathode active material particle may include a lithium metal oxide containing nickel and another transition metal. In exemplary embodiments, in the first cathode active material particle, nickel may be included in the highest content (molar ratio) among metals other than lithium, and the content of nickel among the metals except lithium may be about 60 mol% or more, preferably 80 mol% or more. In this case, a lithium secondary battery having a high energy density may be obtained.

In some embodiments, the nickel content (or molar ratio) of the first cathode active material particle may be greater than that of a second cathode active material particle as will be described later.

In some embodiments, the first cathode active material particle may include a lithium metal oxide represented by the following Chemical Formula 1.

[Chemical Formula 1]  $\quad$  $Li_xNi_aM1_bM2_cO_y$

In the Chemical Formula 1 above, M1 and M2 may be at least one element selected from the group consisting of Co, Mn, Na, Mg, Ca, Ti, V, Cr, Cu, Zn, Ge, Sr, Ag, Ba, Zr, Nb, Mo, Al, Ga and B. In the Chemical Formula 1, $0<x\leq1.2$, $2\leq y\leq2.02$, $0.6\leq a\leq0.95$, and $0.05\leq b+c\leq0.4$.

In some embodiments, M1 and M2 in Chemical Formula 1 may be cobalt (Co) and manganese (Mn), respectively.

For example, nickel may serve as a metal related to a power and/or a capacity of the lithium secondary battery. As described above, the lithium metal oxide having a nickel content of 0.8 or more may be employed as the first cathode active material particle, and the first cathode active material layer 112 may be formed to be in contact with the cathode current collector 105, so that high power and high capacity may be effectively obtained from the cathode 100.

For example, manganese (Mn) may serve as a metal related to mechanical and electrical stability of the lithium secondary battery. For example, cobalt (Co) may be a metal related to a conductivity or a resistance of the lithium secondary battery.

In a preferable embodiment, $0.7\leq a\leq0.9$ and $0.1\leq b+c\leq0.3$ in consideration of achieving high power and high capacity from the first cathode active material layer 112.

In a non-limiting embodiment, the concentration ratio (or molar ratio) of nickel:cobalt:manganese in the first cathode active material particle may be adjusted to about 8:1:1. In this case, the conductivity and life-span property may be maintained by including cobalt and manganese while increasing capacity and power by employing nickel in a molar ratio of about 0.8.

In some embodiments, the first cathode active material particle may have a concentration gradient. For example, the first cathode active material particle may include the lithium metal oxide in which a concentration gradient of at least one metal is formed.

In some embodiments, the first cathode active material particle may include a concentration gradient region between a central portion and a surface. For example, the first cathode active material particle may include a core region and a shell region, and the concentration gradient region may be formed between the core region and the shell region. The core region and the shell region may each have a uniform or fixed concentration.

In an embodiment, the concentration gradient region may be formed at the central portion. In an embodiment, the concentration gradient region may be formed at the shell region or a surface portion.

In some embodiments, the first cathode active material particle may include the lithium metal oxide having a continuous concentration gradient from a center of the particle to a surface of the particle. For example, the first cathode active material particle may have a full concentration gradient (FCG) structure having a substantially entire concentration gradient throughout the particle.

The term "continuous concentration gradient" used herein may indicate a concentration profile which may be changed with a uniform trend or tendency between the center and the surface. The uniform trend may include an increasing trend or a decreasing trend.

The term "central portion" used herein may include a central point of the active material particle and may also include a region within a predetermined radius from the central point. For example, "central portion" may encompass a region within a radius of about 0.1 μm from the central point of the active material particle.

The term "surface" or "surface portion" used herein may include an outermost surface of the active material particle, and may also include a predetermined thickness from the outermost surface. For example, "surface" or "surface portion" may include a region within a thickness of about 0.1 μm from the outermost surface of the active material particle.

In some embodiments, the continuous concentration gradient may include a linear concentration profile or a curved concentration profile. In the curved concentration profile, the concentration may change in a uniform trend without any inflection point.

In an embodiment, at least one metal except for lithium included in the first cathode active material particle may have an increasing continuous concentration gradient, and at least one metal except for lithium included in the first cathode active material particle may have a decreasing continuous concentration gradient. In an embodiment, at least one metal included in the first cathode active material particle except for lithium may have a substantially constant concentration from the central portion to the surface.

When the first cathode active material particle includes the concentration gradient, the concentration (or the molar ratio) of Ni may be continuously decreased from the central portion to the surface or in the concentration gradient region. For example, a concentration of Ni may be decreased in a direction from the central portion to the surface within a range between about 0.95 and about 0.6.

In an embodiment, when the first cathode active material particle includes manganese, a concentration of manganese may increase from the center to the surface or in the concentration gradient region. Thus, a content of manganese may increase at a region adjacent to the surface, so that defects such as an ignition and short-circuit caused by a penetration through the surface of the first cathode active material particle may be prevented or reduced, and a life-span of the lithium secondary electricity may be increased.

In an embodiment, the content of manganese may be maintained substantially constant throughout an entire region of the first cathode active material particle.

In an embodiment, when the first cathode active material includes cobalt, a concentration of cobalt may increase along a direction toward the surface in the concentration gradient region. In an embodiment, the content of cobalt may be maintained substantially constant throughout an entire region of the first cathode active material particle.

In some embodiments, nickel, cobalt and manganese included in the first cathode active material particle may have a substantially constant concentration from the center to the surface, and the first cathode active material particle is not necessarily limited to a particle having the above-described concentration gradient region.

In exemplary embodiments, the first cathode active material particle may have a multi-particle structure. The term "multi-particle" may refer to a secondary particle structure or a secondary particle shape formed by aggregation or assembly of a plurality of primary particles.

The first cathode active material particle may be formed by a co-precipitation method of metal precursors. For example, a metal precursor solution may include precursors of metals that may be included in the cathode active material. For example, the metal precursors may include halides, hydroxides, acid salts, etc., of the metals.

For example, the metal precursors may include a lithium precursor (e.g., lithium oxide, lithium hydroxide, etc.),

a nickel precursor, a manganese precursor and a cobalt precursor.

In some embodiments, the first cathode active material particle may be prepared by a solid phase mixing/reaction, and a method of preparing the first cathode active material particle is not be limited to the solution-based process.

The first cathode active material particle may be mixed and stirred together with a binder, a conductive agent and/or a dispersive additive in a solvent to form a slurry. The slurry may be coated on the cathode current collector 105, and dried and pressed to obtain the first cathode active material layer 112.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the first cathode active material layer 112, and an amount of the first cathode active material particles may be relatively increased. Thus, capacity and power output of the lithium secondary battery may be further improved.

For example, a PVDF-based binder may be used as a cathode binder. In this case, an amount of the binder for forming the first cathode active material layer 112, and an amount of the first cathode active material particles may be relatively increased. Thus, capacity and power of the lithium secondary battery may be further improved.

The conductive agent may be added to facilitate electron mobility between the active material particles. For example, the conductive agent may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

The second cathode active material layer 114 may be formed on the first cathode active material layer 112. As illustrated in FIG. 1, the second cathode active material layer 114 may be directly formed on an upper surface of the first cathode active material layer 112, and may serve as a coating layer of the cathode 100.

The second cathode active material layer 114 may include a second cathode active material particle. The second cathode active material particle may include a lithium metal oxide containing nickel, cobalt and other transition metals.

In exemplary embodiments, a content (or molar ratio) of cobalt in the second cathode active material particle may be 15% or less. In this case, improved conductivity and low resistance may be achieved while realizing high power/capacity of the lithium secondary battery.

In exemplary embodiments, the second cathode active material particle may have a single particle shape or a single particle structure. The term "single particle shape" herein may be used to exclude a secondary particle structure in which a plurality of primary particles mat be agglomerated or combined with each other.

In some embodiments, the second cathode active material particle may have a structure in which a plurality of primary particles are integrally merged to be converted into a substantially single particle. In an embodiment, the single particle shape may include a monolithic shape in which several (e.g., 2 to 10) independent particles are adjacent or attached to each other.

In exemplary embodiments, the second cathode active material particle may have a substantially constant or fixed concentration throughout an entire region of the particle. For example, concentrations of metals except for lithium may be substantially uniform or constant from a central portion of the particle to a surface of the particle in the second cathode active material particle.

In some embodiments, the second cathode active material particle may include nickel (Ni), cobalt (Co) and manganese (Mn). As described above, concentrations or molar ratios of Ni, Co and Mn may be substantially uniform or constant throughout the entire region of the second cathode active material particle.

A concentration of nickel in the second cathode active material particle may be less than a concentration of nickel in the first cathode active material particle. For example, the concentration of nickel in the second cathode active material particle may be fixed to be less than the concentration of nickel at the surface of the first cathode active material particle.

In some embodiments, a molar ratio of Ni among metals except for lithium in the second cathode active material particle may be 50% or more, preferably 60% or more. Within this range, sufficient thermal and penetration stability may be obtained from the second cathode active material layer 114 without degrading capacity/power output of the cathode 100.

In some embodiments, the second cathode active material particle may include a lithium metal oxide represented by the following Chemical Formula 2.

[Chemical Formula 2] $Li_xNi_aCo_bMn_cM4_dM5_eO_y$

In the Chemical Formula 2 above, M4 may include at least one element selected from Ti, Zr, Al, Mg, Si, B or Cr. M5 may include at least one element selected from Sr, Y, W or Mo. In Chemical Formula 2, $0<x<1.5$, $2\leq y\leq 2.02$,

$0.50 \leq a \leq 0.75$, $0.05 \leq b \leq 0.15$, $0.20 \leq c \leq 0.30$, $0 \leq d \leq 0.03$, $0 \leq e \leq 0.03$ and $0.98 \leq a+b+c \leq 1.03$.

As represented by Chemical Formula 2, an amount of Ni may be largest of those of the metals except for lithium in the second cathode active material particle in consideration of capacity and stability of the lithium secondary battery. For example, the concentrations may be decreased in a sequential order of Ni, Mn and Co. In a preferable embodiment, the concentration ratio of Ni:Co:Mn in the second cathode active material particle may be substantially about 65:15:20.

In some embodiments, the second cathode active material particle may be prepared by a solid-state thermal treatment of the metal precursors. For example, a lithium precursor, the nickel precursor, the manganese precursor and the cobalt precursor may be mixed according to the composition of the Chemical Formula 2 above to form a precursor powder.

The precursor powder may be thermally treated in a furnace at, e.g., a temperature from about 700 °C to about 1200 °C, and the precursors may be merged or fused into a substantially single particle shape to obtain the second cathode active material particle having a single particle shape. The thermal treatment may be performed under an air atmosphere or an oxygen atmosphere so that the second cathode active material particle may be formed as a lithium metal oxide particle.

Within the above temperature range, generation of secondary particles may be substantially suppressed, and the second cathode active material particle without defects therein may be achieved. Preferably, the thermal treatment may be performed at a temperature from about 800 °C to about 1,000 °C.

The second cathode active material may be mixed and stirred together with a binder, a conductive agent and/or a dispersive additive in a solvent to form a slurry. The slurry may be coated on the first cathode active material layer 112, and dried and pressed to obtain the second cathode active material layer 114. The binder and the conductive agent substantially the same as or similar to those used in the first cathode active material layer 112 may be also used.

In exemplary embodiments, a weight ratio of the second cathode active material particle and the first cathode active material particle included in the cathode active material layer 110 may be from 1:9 to 6:4. The weight ratio of the first cathode active material particles and the second cathode active material particles having different compositions or molar ratios from each other may be controlled to implement enhanced mechanical property and high energy while using the multi-layered structure.

In exemplary embodiments, the first cathode active material layer 112 contacting the cathode current collector 105 may include the lithium metal oxide having a higher nickel amount than that of the second cathode active material particle in the second cathode active material layer 114. Thus, high capacity/power may be effectively achieved from a current through the cathode current collector 105.

The second cathode active material layer 114 that may be exposed at an outer surface of the cathode 100 may include the second cathode active material particle having a relatively reduced nickel amount so that thermal stability and life-span stability may be enhanced.

As described above, the second cathode active material layer 114 may include the second cathode active material particle having a structure of the single particle shape to suppress generation of cracks during a pressing process. Thus, the second cathode active material layer 114 may substantially serve as a cathode coating layer improving the mechanical property.

In exemplary embodiments, an average diameter of the second cathode active material particle ($D_{50}$) may be in a range from 3 μm to 6 μm, and a particle size distribution of the second cathode active material particles may satisfy Equation 1 below.

[Equation 1]

$$1 \leq D_{90} / D_{10} \leq 4$$

In Equation 1, $D_{90}$ and $D_{10}$ represent particle size values corresponding to 90% and 10%, respectively, with respect to a maximum particle size in a volume-based cumulative particle size distribution.

In this case, a particle deformation in the second positive electrode active material layer may be suppressed to achieve the lithium secondary battery having a high energy density while implementing a long-term storage property.

In some embodiments, a diameter (e.g., $D_{50}$) of the second cathode active material particle may be smaller than that of the first cathode active material particle. Accordingly, a packing property in the second cathode active material layer 114 may be increased, and propagation of heat or crack when being penetrated or pressed may be more effectively suppressed or reduced.

In exemplary embodiments, the second cathode active material particle may have a crystallite size from 200 nm to 600 nm. The crystallite size may be measured based on a 104 peak according to an X-ray diffraction pattern analysis (XRD analysis). For example, the crystallite size may be estimated using a peak broadening of XRD data, and the crystallite size may be quantitatively calculated using a Scherrer equation.

In some embodiments, the first cathode active material particle and/or the second cathode active material particle may further include a coating layer on a surface thereof. For example, the coating layer may include Al, Ti, Ba, Zr, Si, B, Mg, P, W, an alloy thereof or on oxide thereof. These may be used alone or in a combination thereof. The first cathode active material particle may be passivated by the coating layer so that penetration stability and life-span of the battery may be further improved.

In an embodiment, the elements, the alloy or the oxide of the coating layer may be inserted in the cathode active material particle as dopants.

In some embodiments, a thickness of the second cathode active material layer 114 may be less than that of the first cathode active material layer 112. Accordingly, the second cathode active material layer 114 may serve as a coating layer providing a penetration barrier, and the first cathode active material layer 112 may serve as an active layer providing power/capacity.

For example, the thickness of the first cathode active material layer 112 may be in a range from about 50 $\mu$m to about 200 $\mu$m. The thickness of the second cathode active material layer 114 may be in a range from about 10 $\mu$m to about 100 $\mu$m.

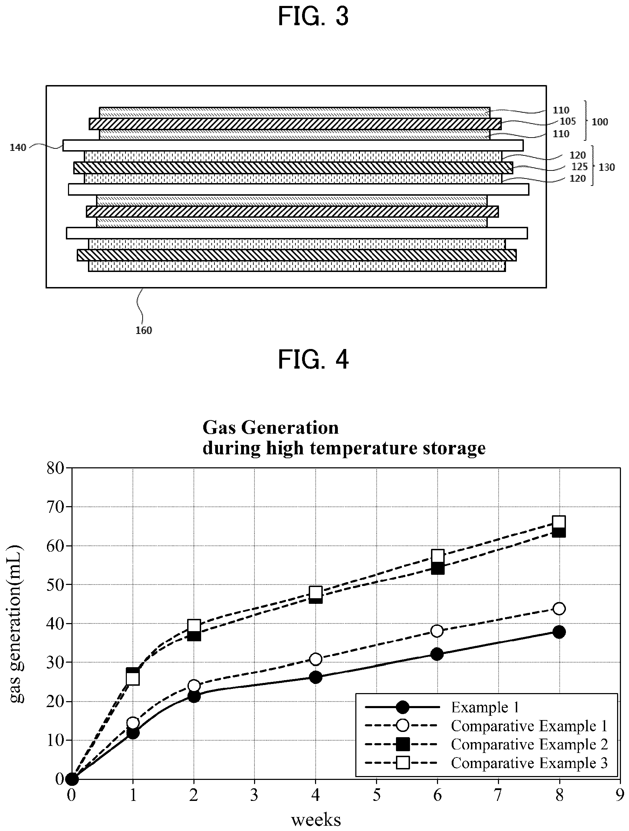

FIGS. 2 and 3 are a top planar view and a cross-sectional view, respectively, schematically illustrating a lithium secondary battery in accordance with exemplary embodiments. Specifically, FIG. 3 is a cross-sectional view taken along a line I-I' of FIG. 2 in a thickness direction of the lithium secondary battery.

Referring to FIGS. 2 and 3, a lithium secondary battery 200 may include an electrode assembly 150 housed in a case 160. The electrode assembly 150 may include the cathode 100, an anode 130 and a separation layer 140 repeatedly stacked as illustrated in FIG. 3.

The cathode 100 may include the cathode active material layer 110 coated on the cathode current collector 105. Although not illustrated in detail in FIG. 3, the cathode active material layer 110 may include a multi-layered structure including the first cathode active material layer 112 and the second cathode active material layer 114 as described with reference to FIG. 1.

The anode 130 may include an anode current collector 125 and an anode active material layer 120 formed by coating an anode active material on the anode current collector 125. The anode active material commonly used in the related art may be used without a specific limitation.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may be also formed from a non-woven fabric including a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without loss by, e.g., precipitation or sedimentation. Therefore, the enhancement of power and stability by the combination of the first and second cathode active material layers 112 and 114 may be effectively implemented.

In exemplary embodiments, an electrode cell may be defined by the cathode 100, the anode 130 and the separation layer 140, and a plurality of the electrode cells may be stacked to form an electrode assembly 150 having, e.g., a jelly roll shape. For example, the electrode assembly 150 may be formed by winding, laminating or folding of the separation layer 140.

The electrode assembly 150 may be accommodated in an outer case 160 together with an electrolyte to form the lithium secondary battery. In exemplary embodiments, the electrolyte may include a non-aqueous electrolyte solution.

The non-aqueous electrolyte solution may include a lithium salt and an organic solvent. The lithium salt may be represented by Li$^+$X$^-$, and an anion of the lithium salt X$^-$ may include, e.g., F$^-$, Cl$^-$, Br$^-$, I$^-$, NO3$^-$, N(CN)$_2^-$, BF$_4^-$, ClO$_4^-$, PF$_6^-$, (CF$_3$)$_2$PF$_4^-$, (CF$_3$)$_3$PF$_3^-$, (CF$_3$)$_4$PF$_2^-$, (CF$_3$)$_5$PF$^-$, (CF$_3$)$_6$P$^-$, CF$_3$SO$_3^-$, CF$_3$CF$_2$SO$_3^-$, (CF$_3$SO$_2$)$_2$N$^-$, (FSO$_2$)$_2$N$^-$, CF$_3$CF$_2$(CF$_3$)$_2$CO$^-$, (CF$_3$SO$_2$)$_2$CH$^-$, (SF$_5$)$_3$C$^-$, (CF$_3$SO$_2$)$_3$C$^-$, CF$_3$(CF$_2$)$_7$SO$_3^-$, CF$_3$CO$_2^-$, CH$_3$CO$_2^-$, SCN$^-$, (CF$_3$CF$_2$SO$_2$)$_2$N$^-$, etc.

The organic solvent may include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 2, an electrode tab (a cathode tab and an anode tab) may be formed from each of the cathode current collector 105 and the anode current collector 125 to extend to one end of the case 160. The electrode tabs may be welded together with the one end of the case 160 to form an electrode lead (a cathode lead 107 and an anode lead 127) exposed at an outside of the case 160.

FIG. 2 illustrates that the cathode lead 107 and the anode lead 127 protrude from an upper side of the case 160 in a planar view. However, positions of the electrode leads are not specifically limited. For example, the electrode leads may protrude from at least one of lateral sides of the case 160, or may protrude from a lower side of the case 160. Further, the cathode lead 107 and the anode lead 127 may protrude from different sides of the case 160.

The lithium secondary battery may be fabricated into a cylindrical shape using a can, a prismatic shape, a pouch shape, a coin shape, etc.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

A first cathode active material particle having a secondary particle structure and a composition of $LiNi_{0.80}Co_{0.12}Mn_{0.08}O_2$ was prepared. A first cathode mixture was prepared by mixing the first cathode active material particle, Denka Black as a conductive agent and PVDF as a binder in a mass ratio of 92:5:3, respectively.

A second cathode active material particle having a composition of $LiNi_{0.65}Co_{0.15}Mn_{0.20}O_2$ having a single particle shape was prepared ($D_{90}$ = 6.5 $\mu$m, $D_{10}$ = 3.5 $\mu$m). A second cathode mixture was prepared by mixing the second cathode active material particle, Denka Black as a conductive agent and PVDF as a binder in a mass ratio of 92:5:3, respectively.

A mass ratio of the first cathode active material particle relative to the second cathode active material particle included in the first cathode mixture and the second cathode mixture was 8:2.

The first cathode mixture was coated on an aluminum current collector, and the second cathode mixture was coated thereon, and then dried and pressed to form a cathode. An electrode density of the cathode was 3.7 g/cc.

An anode slurry was prepared by mixing 93 wt% of a natural graphite as an anode active material, 5 wt% of a flake type conductive agent KS6, 1 wt% of SBR as a binder, and 1 wt% of CMC as a thickener. The anode slurry was coated, dried and pressed on a copper substrate to form an anode.

The cathode and the anode obtained as described above were notched with a proper size and stacked, and a separator (polyethylene, thickness: 25$\mu$m) was interposed between the cathode and the anode to form an electrode cell. Each tab portion of the cathode and the anode was welded. The welded cathode/separator/anode assembly was inserted in a pouch, and three sides of the pouch (e.g., except for an electrolyte injection side) were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by dissolving 1M $LiPF_6$ in a mixed solvent of EC/EMC/DEC (25/45/30; volume ratio), and then 1 wt% of vinylene carbonate, 0.5 wt% of 1,3-propensultone (PRS), and 0.5 wt% of lithium bis(oxalato) borate (LiBOB) were added.

Thereafter, pre-charging was performed for 36 minutes at a current (5A) corresponding to 0.25C. After 1 hour, degassing was performed, and charge and discharge for aging were performed (charging condition CC-CV 0.2C 4.2V 0.05C CUT-OFF, discharging condition CC 0.2C 2.5V CUT-OFF) after more than 24 hours. Subsequently, standard charging and discharging was performed (charging condition CC-CV 0.5 C 4.2V 0.05C CUT-OFF, discharging condition CC 0.5C 2.5V CUT-OFF).

Example 2

A lithium secondary battery was fabricated by the same method as that in Example 1, except that a particle having a single particle shape and a composition of $LiNi_{0.65}Co_{0.15}Mn_{0.20}O_2$ ($D_{90}$ = 9.5 $\mu$m, D10 = 2.5 $\mu$m) was used as the second cathode active material particle.

Comparative Example 1

A lithium secondary battery was fabricated by the same method as that in Example 1, except that the first cathode active material particle and the second cathode active material particle were mixed to form a single cathode mixture, and then a cathode active material layer was formed as a single layer.

Comparative Example 2

A lithium secondary battery was fabricated by the same method as that in Example 1, except that a particle having a secondary particle structure and a composition of $LiNi_{0.65}Co_{0.15}Mn_{0.20}O_2$ was used as the second cathode active material particle.

Comparative Example 3

A lithium secondary battery was fabricated by the same method as that in Example 1, except that the secondary particle of Comparative Example 2 was used as the second cathode active material particle, and the first cathode active material particle and the second cathode active material particle were mixed to form a single cathode mixture, and then a cathode active material layer was formed as a single layer.

Comparative Example 4

A lithium secondary battery was fabricated by the same method as that in Example 1, except that a particle having a single particle shape and a composition of $LiNi_{0.65}Co_{0.15}Mn_{0.20}O_2$ ($D_{90}$ = 13.5 $\mu$m, D10 = 2.8 $\mu$m) was used as the second cathode active material particle.

Comparative Example 5

A lithium secondary battery was fabricated by the same method as that in Example 1, except that $LiNi_{1/3}Co_{1/3}Mn_{1/3}O_2$ (single particle shape NCM111) having a single particle shape was used as the second cathode active material particle.

Experimental Example

(1) Evaluation on life-span property at high temperature

500 cycles of a charging (CC-CV 1.0 C 4.2V 0.05C CUT-OFF) and a discharging (CC 1.0C 2.5V CUT-OFF) were repeated in a chamber at 45°C using the secondary batteries of Examples and Comparative Examples. Life-span properties at high temperature were measured by a percentage (%) of a remaining capacity and a DC-IR at 500th cycle relative to those at 1st cycle. Further, BET (Brunauer-Emmett-Teller) increasing rates after the pressing process of the cathodes in Examples and Comparative Examples were measured. The results are shown in Table 1 below.

(2) Evaluation on high temperature storage property

After charging (CC-CV 0.5C 4.2V 0.05C CUT-OFF) the secondary batteries of Examples and Comparative Examples and storing in a chamber of 60 °C for 8 weeks, remaining capacities and DC-IR increasing rates were measured
Further, after storing the secondary batteries for 8 weeks, amounts of generated gas were measured using a gas capture analysis. The results are shown in FIG. 4.

[Table1 ]

| | Cathode Structure | $D_{90}$ / $D_{10}$ (Second cathode active material) | BET increasing rate after pressing (%) | Remaining Capacity (%) (500cycle) | DC-IR increasing rate (%) (500cycle) | Remaining Capacity (%) (after 8 weeks) | DC-IR increasing rate (%) (after 8 weeks) |
|---|---|---|---|---|---|---|---|
| Example 1 | Double Layer | 1.9 | 119 | 82.2 | 152 | 85.7 | 125 |
| Example 2 | Double Layer | 3.8 | 129 | 80.1 | 172 | 81.1 | 132 |
| Comparative Example 1 | Single Layer | 1.9 | 125 | 80.5 | 170 | 82.4 | 130 |
| Comparative Example 2 | Double Layer | 2.9 | 178 | 69.8 | 205 | 70.2 | 142 |
| Comparative Example 3 | Single Layer | 2.9 | 185 | 65.2 | 223 | 69.1 | 145 |
| Comparative Example 4 | Double Layer | 4.8 | 155 | 72.9 | 211 | 71.4 | 141 |

(continued)

| | Cathode Structure | $D_{90}/D_{10}$ (Second cathode active material) | BET increasing rate after pressing (%) | Remaining Capacity (%) (500cycle) | DC-IR increasing rate (%) (500cycle) | Remaining Capacity (%) (after 8 weeks) | DC-IR increasing rate (%) (after 8 weeks) |
|---|---|---|---|---|---|---|---|
| Comparative Example 5 | Double Layer | 4.3 | 150 | 75.3 | 195 | 73.2 | 138 |

Referring to Table 1 and FIG. 4, in Examples where the first cathode active material layer containing the secondary particle NCM and the second cathode active material layer containing the single particle NCM were formed in a double-layered structure, improved life-span properties and capacity retentions under harsh conditions at high temperature were achieved compared to those from Comparative Examples.

Further, the secondary battery of Comparative Example 5 having different metal ratio of the second cathode active material particle provided life-span and storage properties at high temperature less than those of Examples.

## Claims

1. A cathode for a lithium secondary battery, comprising:

   a cathode current collector; and
   a first cathode active material layer including a first cathode active material particle, and a second cathode active material layer including a second cathode active material particle, the first cathode active material layer and the second cathode active material layer being sequentially stacked from the cathode current collector,
   wherein the first cathode active material particle and the second cathode active material particle have different compositions or particle structures from each other, and the first cathode active material particle and the second cathode active material particle include lithium metal oxides containing nickel,
   wherein the second cathode active material particle has a single particle shape and has a particle size distribution satisfying Equation 1:

$$[\text{Equation 1}]$$

$$1 \leq D_{90}/D_{10} \leq 4$$

   wherein, in Equation 1, $D_{90}$ and $D_{10}$ represent particle size values corresponding to 90% and 10%, respectively, with respect to a maximum particle size in a volume-based cumulative particle size distribution.

2. The cathode for a lithium secondary battery according to claim 1, wherein the first cathode active material particle has a secondary particle structure in which primary particles are assembled.

3. The cathode for a lithium secondary battery according to claim 1, wherein a molar ratio of nickel among metals except for lithium in the first cathode active material particle is 60% or more.

4. The cathode for a lithium secondary battery according to claim 1, wherein the first cathode active material particle includes a lithium metal oxide represented by Chemical Formula 1:

   [Chemical Formula 1]     $Li_xNi_aM1_bM2_cO_y$

   wherein, in Chemical Formula 1, M1 and M2 each includes at least one element selected from the group consisting of Co, Mn, Na, Mg, Ca, Ti, V, Cr, Cu, Zn, Ge, Sr, Ag, Ba, Zr, Nb, Mo, Al, Ga and B, and
   $0<x\leq1.2$, $2\leq y\leq2.02$, $0.6\leq a\leq0.95$, and $0.05\leq b+c\leq0.4$.

5. The cathode for a lithium secondary battery according to claim 1, wherein the first cathode active material particle includes a concentration gradient region between a central portion and a surface, and a concentration gradient of at least one metal is formed in the concentration gradient region.

6. The cathode for a lithium secondary battery according to claim 1, wherein the second cathode active material particle further includes cobalt, and a molar ratio of cobalt among metals except for lithium in the second cathode active material particle is 15% or less.

7. The cathode for a lithium secondary battery according to claim 1, wherein a molar ratio of nickel among metals except for lithium in the second cathode active material particle is 50% or more.

8. The cathode for a lithium secondary battery according to claim 1, wherein elements of a lithium metal oxide included in the second cathode active material particle have constant concentrations from a central portion to a surface.

9. The cathode for a lithium secondary battery according to claim 1, wherein an average particle diameter of the second cathode active material particle is in a range from 3 $\mu$m to 6 $\mu$m.

10. The cathode for a lithium secondary battery according to claim 1, wherein the second cathode active material particle includes a lithium metal oxide represented by Chemical Formula 2:

$$[\text{Chemical Formula 2}] \qquad Li_xNi_aCo_bMn_cM4_dM5_eO_y$$

wherein, in Chemical Formula 2, M4 includes at least one element selected from the group consisting of Ti, Zr, Al, Mg, Si, B and Cr, M5 includes at least one element selected from the group consisting of Sr, Y, W and Mo, and $0<x<1.5$, $2\leq y\leq 2.02$, $0.50\leq a\leq 0.75$, $0.05\leq b\leq 0.15$, $0.20\leq c\leq 0.30$, $0\leq d\leq 0.03$, $0\leq e\leq 0.03$ and $0.98\leq a+b+c\leq 1.03$.

11. The cathode for a lithium secondary battery according to claim 1, wherein a crystallite size of the second cathode active material particle is in a range from 200 nm to 600 nm.

12. The cathode for a lithium secondary battery according to claim 1, wherein a weight ratio of the second cathode active material particle and the first cathode active material particle included in the cathode is 1:9 to 6:4.

13. The cathode for a lithium secondary battery according to claim 1, wherein a nickel content in the second cathode active material particle is smaller than that in the first cathode active material particle.

14. The cathode for a lithium secondary battery according to claim 1, wherein an average diameter of the second cathode active material particle is smaller than that of the first cathode active material particle.

15. A lithium secondary battery, comprising:

the cathode for a lithium secondary battery of claim 1; and
an anode facing the cathode.

# FIG. 1

<u>100</u>

114 ⎱
112 ⎰ 110

105

# FIG. 2

<u>200</u>

107

127

I

I'

150

160

# FIG. 3

# FIG. 4

**Gas Generation
during high temperature storage**

Europäisches
Patentamt

European
Patent Office

Office européen
des brevets

# EUROPEAN SEARCH REPORT

Application Number

EP 21 18 4615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/127276 A1 (KIM SOO HO [KR] ET AL) 23 April 2020 (2020-04-23) <br><br> * column 12 - column 227; figures 1,3 * <br> ----- | 1,3,4, 6-10, 12-15 | INV. <br> H01M4/131 <br> H01M4/36 <br> H01M4/505 <br> H01M4/525 |
| X | US 2018/062171 A1 (HOSOYA YOSUKE [JP] ET AL) 1 March 2018 (2018-03-01) <br> * paragraph [0009] - paragraph [0013] * <br> ----- | 1,2,5 | |
| X | WO 2019/151834 A1 (LG CHEM LTD) 8 August 2019 (2019-08-08) <br> * paragraph [0014] - paragraph [0122] * <br> ----- | 1,11 | |

TECHNICAL FIELDS
SEARCHED      (IPC)

H01M

The present search report has been drawn up for all claims

| Place of search | Date of completion of the search | Examiner |
|---|---|---|
| Munich | 26 October 2021 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 4615

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2021

| Patent document cited in search report | | | Publication date | Patent family member(s) | | | Publication date |
|---|---|---|---|---|---|---|---|
| US 2020127276 | A1 | | 23-04-2020 | CN<br>EP<br>KR<br>US | 111081993<br>3641024<br>20200043612<br>2020127276 | A<br>A1<br>A<br>A1 | 28-04-2020<br>22-04-2020<br>28-04-2020<br>23-04-2020 |
| US 2018062171 | A1 | | 01-03-2018 | CN<br>EP<br>KR<br>US<br>US<br>US<br>WO | 1515041<br>1465271<br>20040072023<br>2004076882<br>2009029254<br>2018062171<br>03063275 | A<br>A1<br>A<br>A1<br>A1<br>A1<br>A1 | 21-07-2004<br>06-10-2004<br>16-08-2004<br>22-04-2004<br>29-01-2009<br>01-03-2018<br>31-07-2003 |
| WO 2019151834 | A1 | | 08-08-2019 | CN<br>EP<br>JP<br>KR<br>US<br>WO | 111492510<br>3712990<br>2021507497<br>20190093453<br>2020388830<br>2019151834 | A<br>A1<br>A<br>A<br>A1<br>A1 | 04-08-2020<br>23-09-2020<br>22-02-2021<br>09-08-2019<br>10-12-2020<br>08-08-2019 |

EPO FORM P0459

For more details about this annex : see Official Journal of the European Patent Office, No. 12/82

**REFERENCES CITED IN THE DESCRIPTION**

**Patent documents cited in the description**

- KR 1020200089847
- KR 1020170093085